# EUROPEAN PATENT APPLICATION

(11) **EP 4 099 483 A1**
(43) Date of publication of application: **07.12.2022**
(21) Application number: 21177526.7
(22) Date of filing: 03.06.2021
(51) Int. Cl.: H01M 10/6568, B60L 1/00, B60L 58/26, H02J 7/00, B60H 1/00, B60K 11/02, B60L 1/02, H05K 7/20

(54) **THERMAL MANAGEMENT UNIT**

(71) Applicant: Pfannenberg GmbH, 21035 Hamburg (DE)
(72) Inventor: MONTINI, Mauro, 43036 FIDENZA PR (IT)
(74) Representative: RGTH

(57) **Abstract**

The invention provides a thermal management unit (10) for thermal conditioning of at least one electrical device, comprising a refrigerant circuit (20) with at least one compressor (21), a condenser (22), an evaporator (23) and an expansion valve (24); and a first part of a conditioning circuit (30) with at least one pump (33) for circulating a conditioning liquid, a tank (34) and a heater (35), wherein the pump (33) is electrically connectable to a DC source (51) via a first inverter (61), and wherein the compressor (21) or the heater (35) are, in particular selectively, connectable via a second inverter (62) to the DC source (51), wherein at least one of the first inverter (61) and the second inverter (62)
- is formed as a frequency inverter, comprising a rectifier circuit (65), an intermediate circuit (66) and an inverter circuit (67), wherein the intermediate circuit (66) comprises an input,
- is connectable via the input of the intermediate circuit (66) with the DC source (51), and
- is configured to be powered by the DC source (51) which comprises a voltage variation range. Furthermore, an electrical device arrangement (100) is provided.

## Description

The invention relates to a thermal management unit for thermal conditioning of at least one electrical device such as a battery system or parts thereof, comprising a refrigerant circuit with at least one compressor, a condenser, an evaporator and an expansion valve; and a first part of a conditioning circuit with at least one pump for circulating a conditioning liquid. Furthermore, the invention relates to an electric device arrangement with such a thermal management unit.

The operation of high voltage li-ion battery systems with a rated voltage of over 300 VDC or 800 VDC is challenging and requires careful thermal management. Since the lithium-ion battery cells change their voltage depending on the state of charge, the usable DC voltage of the battery system may change between 300 VDC and 800 VDC for example. Thus, for providing thermal conditioning of the battery system usually an external power source is required to provide constant voltage to power the components like air conditioner or water cooler resulting in a complex and expensive arrangement.

There are different inverters known for different use cases, e.g. solar power applications. Such inverters are regularly utilized for solar power applications in order to convert the voltage of solar cells to a charging voltage of a battery system or to the voltage of a power grid. Such inverters usually convert DC from solar power grid to 230 - 460 VAC of a power grid depending on the frequency and the arrangement of multiple inverters. These inverters are not suitable for converting the electrical power of a battery system in order to power electrical motors of water coolers or of air conditioner compressors since they are specifically designed to be connected to an existing grid where they follow the phase alignment without one that they cannot work.

Furthermore, in order to provide thermal conditioning of the battery system it is essential to heat or to cool the battery cells of the battery system. The heat is applied by an electrically powered heater and usually requires a separate DC/DC converter, since the AC voltage provided by inverters for powering motors is not suitable to power a ohmic resistance like the heater due to the screening functions of inverter and due to the multi-phase AC output. Since frequency inverters require an electrical back force for proper function, it is not possible to provide power supply to the ohmic resistance directly from the frequency inverter.

A further problem occurs when using inverters to convert the variable voltage of the battery system to power components which require constant voltages is that these components are often motors. These motors may set the inverter into a generator mode resulting in a further increase of the DC voltage of the battery system. During the operation in motor mode, the electrical energy flows from the supplying mains via the inverter to the motor which converts electrical energy into mechanical energy. During the operation in generator mode, the electrical energy flows back from the motor to the inverter. The motor converts the mechanical energy into electrical energy and acts as a generator. If the increase of the DC voltage during the generator mode exceeds an upper limit, the output stage of the inverter will be blocked to prevent the device from being destroyed. The drive coasts until the DC voltage reaches the permissible value range again.

Beside the inverters for solar power applications, inverters for railroad applications are known. These inverters are powered by a constant source voltage which is picked up from overhead power lines. Hence, such inverters are not suitable for transforming highly variating source voltages during charging and discharging cycles of battery systems in order to power components of a thermal management.

Therefore, the object underlying the invention can be seen as providing a technically simple thermal conditioning unit for portable or stationary electrical devices, such as battery systems or parts thereof, without the need of an additional power source.

This object is achieved by means of the respective subject-matter of the independent claims. Advantageous embodiments are subject-matter of respective dependent claims.

According to one aspect of the invention, a thermal management unit for thermal conditioning of at least one electrical device, e.g. a battery system or parts thereof, is provided. The thermal management unit may be formed as a chiller or a combined chiller and heater and comprises a refrigerant circuit with at least one compressor, a condenser, an evaporator and an expansion valve. The refrigerant circuit is formed to provide cooling power for removing excess heat from the electrical device.

Furthermore, the thermal management unit comprises a first part of a conditioning circuit with at least one pump for circulating a conditioning liquid, a tank and a heater.

Preferably, the evaporator may comprise an integrated heat exchanger which is thermally coupled with the refrigerant circuit. Thus, a heat exchange between the refrigerant circuit and the first part of the conditioning circuit is provided inside the evaporator.

The pump of the first part of a conditioning circuit is electrically connectable to a DC source via a first inverter.

The compressor or the heater is, in particular selectively, connectable via a second inverter to the DC source.

The heater may be arranged inside the tank, next to the tank or may be arranged outside the tank.

The first and/or the second inverter are formed as a frequency inverter. The frequency inverter comprises a rectifier circuit, an intermediate circuit and an inverter circuit, wherein the intermediate circuit comprises an input. The first and/or the second inverter is connectable via the input of the intermediate circuit with the DC source, wherein the first and/or the second inverter is configured to be powered by the DC source which comprises a voltage variation range.

Thus, the thermal management unit may comprise solely the first inverter which is formed as a (first) frequency inverter or may comprise solely the second inverter which is formed as a (second) frequency inverter.

Alternatively or additionally, both, the first inverter and the second inverter may be formed as frequency inverters.

The input of the intermediate circuit is directly connectable with the DC source. The input of the intermediate circuit may be formed as a DC link of the frequency inverter. Usually, the DC link of a frequency inverter is utilized for parallel connection of multiple frequency inverters via DC bus. The inventive thermal management unit utilizes this input as the direct connection to the DC source. Thus, additional electrical circuits for connecting the DC source may be omitted.

The voltage variation range of the DC source for powering the first and/or the second inverter may be at least 100V. Alternatively, the voltage variation range of the DC source may be at least 150V, preferably at least 200V or more preferably at least 230V. For example, a battery system may be used as a DC source with a voltage range between 570V and 800V, thus resulting in a voltage variation range of 230V depending on the state of charge of the battery system. The necessary lower threshold of the voltage range of the DC source can depend on the utilized amount of phases, e.g. one single phase or three phases, of the to be powered electrical components of the thermal management unit.

By providing the thermal management unit a cooling system for cooling electrical devices, e.g. battery packs or single batteries, is realized. The conditioning circuit may be formed as a water circuit for circulating the water or a conditioning liquid to the batteries with at least one pump, which guarantees the liquid circulation in the conditioning circuit. The conditioning may comprise water or any kind of mixture of water with glycole, ethylene or prophylene in an exemplary ratio between 10% and 70%. The heater is provided in order to warm up the conditioning liquid in specific conditions. The tank may be coupled to the first part of the conditioning circuit. The tank is designed as a semi-atmospheric or atmospheric tank for enabling degassing of the conditioning liquid and provides storage. The heat exchange in the evaporator enables heat transfer between the conditioning liquid and the refrigerant gas inside the refrigerant circuit.

The refrigerant circuit is formed as a vapor compression cycle with at least one compressor for active cooling, an air cooled condenser to reject the heat generated by the active refrigerant circuit to the ambient. Optionally, the refrigerant circuit may comprise a thermostatic valve or a capillary. A solenoid valve may prevent the refrigerant gas from migration during an off period of the refrigerant circuit.

The thermal management unit comprises several electrical motors, for example in the compressor and in the pump. Each motor of the thermal management unit may be provided with an independent inverter that is used to convert the DC voltage of the DC source to a three-phase output. The value of the input voltage could for example be at least equal to the minimum output voltage e.g. 400 VAC multiplied 1,41 = 564 VDC. To do this, the DC-bus link port or the parallel connection DC link of the inverter that is usually utilized to connect multiple inverters parallel in industrial application is used as input port for the DC source.

Usually, single inverters are either directly connected to an AC system like a motor or via upstream filters. RFI filters are already integrated in many inverters. Depending on the requirements, mains chokes or mains filters can be used. Inverter groups are connected to the DC side or DC voltage with the parallel connection DC link. For this purpose, the inverters have to be provided with a connection for the parallel connection DC link, e.g. terminals +UG/-UG. This enables the energy exchange in phases with operation in generator and motor mode of several drives in the network.

For example, the thermal management unit is applied in a portable system but a grid needs to be created for each of the utilized motors of the thermal management unit. Thus, the first inverter and the second inverter are connected in parallel to redistribute via parallel connection DC links the energy of the DC source. Thus, the thermal management unit may be used as a high-density chiller for electrical device cooling like battery system cooling that is suitable to work with variable input voltage DC power supply from e.g. 300 to 800VDC, preferably from 550 VDC to 800 VDC.

Alternatively or additionally, the thermal management unit may be configured as a stationary or a mobile/portable unit that is connected or connectable to at least one portable or stationary electrical device, e.g. a battery system. Such battery systems may comprise a plurality of battery cells and battery modules. Preferably, the battery system is based on lithium-ion, NiMH, lead-acid or on a comparable technology. Such battery systems can be utilized to provide electrical power to loads in remote locations or in locations were the provision of grid power is not reliable due to unstable grids, for charging stations for e-mobility applications, for example as a buffer, and so on. It may also be possible to connect the thermal management unit to battery system of vehicles, such as trucks, buses, trains, etc. However, it may be preferably to not utilize the thermal management unit for connection with battery system or any other electrical devices of vehicles.

The first part of the conditioning circuit is coupled with a second part of the conditioning circuit in order to form an entire conditioning circuit. The second part of the conditioning circuit leads to and/or through the electrical device and comprises heat exchangers for transferring heat to or from at least one part of the electrical device. Thus, by providing the entire conditioning circuit the thermal management unit is thermally coupled with the relevant parts of the electrical device. The relevant part of the electrical device may be a component which dissipates heat and requires a thermal management or thermal conditioning for proper working conditions. Such relevant parts of the electrical device are for example transformers, inverters, controllers, batteries etc. which require adjustment of their temperature.

For example the electrical device can be a battery system with at least one battery pack and an electrical connection and management part comprising electrical components for charging the at least one battery pack and for distributing the electrical power of the at least one battery pack. The thermal management unit is electrically and thermally connectable with the electrical device. Thus, the electrical device may comprise batteries but also can be formed without any batteries.

Advantageously the electrical device can supply the thermal management unit with the required DC voltage and is used as the DC source. The electrical device can have an external power source or an internal power source. For example, a battery or a battery system of the electrical device may form an internal power source. An external power line connection of the electrical device can function as an external power source of the electrical device.

The first inverter is utilized to provide a stable voltage for powering the pump of the conditioning circuit and optionally fan motors of the thermal management unit. The second inverter is utilized to provide a stable voltage for selectively powering either the compressor or the heater, since the thermal management unit provides the function of a chiller or of a heater of the electrical device. The stable voltage is provided independently from the DC source of the electrical device; thus, the thermal management unit is able to operate with a battery or battery system as DC source independent from the state of charge and the resulting DC voltage of the battery system.

The battery system as an electrical device dissipates heat during charging or discharging procedure. By using the thermal management unit as a chiller or cooler, the excess heat of the battery system can be removed. In some scenarios, like during winter application, the battery system requires to heat up prior to its usage. Thus, the thermal management unit may act as a heater by applying heat directly to the conditioning circuit.

By providing the inverters each motor and component of the thermal management unit may be controlled in an individual manner in a wide range of DC power supply voltages even with high time variations. Thus, despite the variation in the DC voltage of the DC source, a stable output voltage for all motors and components is maintained such that a fixed liquid flow through the conditioning circuit and a fixed cooling performance of the refrigerant circuit are realized.

According to an embodiment, both the first inverter and the second inverter are formed as a first frequency inverter and a second frequency inverter. Both frequency inverters comprise the rectifier circuit, the intermediate circuit and the inverter circuit, wherein the input of the intermediate circuit is connectable with the DC source, and wherein the first inverter and the second inverter are configured to be powered by the DC source which comprises a voltage variation range. Thus, both inverters are formed as frequency inverters and may power different components of the thermal management unit simultaneously.

According to a further embodiment, the thermal management unit is configured for thermal conditioning of the electrical device which is formed as at least one battery system or as at least one part of the battery system.

In accordance with a further embodiment, the thermal management unit is configured to be powered by the at least one battery system as a DC source of the thermal management unit. Thus, the electrical device which requires cooling or heating acts as DC source for the thermal management unit. Such a thermal management unit does preferably not require additional power sources.

The refrigerant circuit may perform more efficient if the thermal management unit comprises at least one condenser fan for cooling the condenser of the refrigerant circuit. Preferably, the at least one condenser fan is connected to the DC source via a DC/DC converter, the first inverter, the second inverter or a third inverter. For example, the at least one condenser fan may be formed as a fan for telecommunication applications with a rate voltage of 48 VDC.

The third inverter can preferably be used if the at least one condenser fan is formed as an AC fan which can be powered by one phase or by three phases.

The condenser fan may comprise are variable speed to control the condensing pressure of the condenser. Furthermore, the at least one condenser fan may be designed as an axial fan for providing low available pressure or as a radial-centrifugal fan for providing high available static pressure.

Depending on the application, the condenser may be designed as a microchannel condenser. The at least one condenser fan may be arranged directly next to the condenser.

In a further embodiment, the tank comprises a cylindrical form with an inner diameter which is bigger than an inner diameter of pipes of the first part of the conditioning circuit and comprises a fluid level switch. Preferably, the tank is designed to improve the degassing of the air from the conditioning circuit as well as for providing enough reservoir to fill-in the second part of the second conditioning part at the battery side at a start-up phase.

The tank may comprise an inner diameter which defines a space for storing at least a part of the conditioning liquid of the conditioning circuit. The inner diameter of the tank is preferably variable along the height of the tank. Thus, the volume of the tank and the shape of the tank may be adapted according to the available space inside a housing of the thermal management unit.

The return of the conditioning liquid leads into the tank and thus, happens in a bigger inner diameter of the tank. Hence, the speed of the conditioning liquid is lower inside the tank, so that the air contained inside the conditioning liquid can easily be separated from the conditioning liquid and rise up to a free surface of the conditioning liquid at the upper part or highest side of the tank.

According to a further embodiment, the tank comprises an electrical level switch, which is placed in a position that prevents frequent on/off action of the electrical level switch for deactivating the heater, if the fluid level is too low. By utilizing the electrical level switch the heater, which may be positioned at the bottom of the tank, is prevented from working in dry condition.

The bigger inner diameter of the tank reduces the speed of the conditioning liquid in the inner side below 0,1 m/s; at this low speed the air mixed in the conditioning liquid that is coming back from the conditioning circuit flows to the top. The return of the conditioning liquid is always under the free surface of the conditioning liquid, even with low liquid level; this measure is guaranteed by the electrical level switch that is placed above. This prerequisite is fundamental to avoid turbulence at the return side that can create eddies and allow the air to be sucked again from the pump. Depending on the diameter or the dimensions of the tank the speed of the conditioning liquid may be kept lower than 0,5 m/s; in this way the formation of eddies in the lower suction side so the pump are avoided. Furthermore, due to less air inside the conditioning fluid, the heat transfer of the conditioning fluid is higher such that the thermal management unit may operate in a more efficient manner.

The excess of air inside the conditioning liquid is efficiently released, if the tank is equipped with a pressure relieve valve at its highest side, wherein the suction inlet of the pump is connected with the tank at the tanks lowest side. Preferably, the tank is arranged in an upright position, especially as a standing cylinder, wherein the pressure relieve valve is arranged at its upper end. Thus, the air may separate fast and reliably from the conditioning liquid.

In a further embodiment, the pressure relieve valve is formed as a cap with a spring-loaded ball valve, wherein the pressure relieve valve is arranged above an air column inside the tank. Thus, the pressure relieve valve fulfills the function of limiting maximum pressure inside the conditioning circuit and of providing a refill opening.

The cap with a spring and a ball enables the internal pressure to be equalized at the same level of atmospheric pressure without liquid leakage. Thus, the pressure relieve valve is formed as a breather and comprises an O-ring and external valve with spring calibrated approx. 0,15 bar that opens an intervals and vents internal pressure; the special design ensures to avoid conditioning liquid leakage. In this case the internal pressure of the conditioning circuit may increase a little during the operation of the thermal management unit due to the water increasing temperature. When the value increases to e.g. 0,15 bar over the ambient pressure, the pressure relieve valve releases this extra pressure.

This measure ensures that the thermal management unit may perform in a wide range of ambient temperatures without the problem of over pressure due to the volume variation of the conditioning liquid.

The tank acts as an air-liquid separator and is preferably designed specifically to suit in a narrow space of the thermal management unit.

In a further embodiment the pump and/or the compressor are configured to perform in a fixed speed or variable speed operation. Thus, the characteristics of the refrigerant circuit and of the conditioning circuit may be controlled precisely. Preferably each electrical motor of the pump and/or of the compressor can be connected to an own inverter in order to provide precise control of the speed of each of the electrical motors. The speed of the electrical motors is preferably controllable by the first inverter and/or the second inverter, wherein the back electromagnetic force may be used by the controller as an input signal.

In a further embodiment, at least one coil for providing back electromagnetic force is arranged in at least one electrical path between the second inverter and the heater, wherein an inductance of the at least one coil is adapted to electrical characteristics of the second inverter. The heater may comprise a power rating of up to 3,5 kW. The second inverter is the same inverter that supplies the compressor and is preferably switched selectively with the heater or with the compressor, since the refrigerator circuit and the conditioning circuit never work together in heating and cooling operation at the same time. Comparable to the break resistor, the heater is also formed as a resistor for producing and dissipating heat into the conditioning liquid. Thus, in order to allow proper operation of the second inverter, the heater is connected inductances in series to the resistance of the heater to simulate motor winding and create a magnetic field. Depending on the electrical design of the heater and the number of the utilized phases there may be one coil for each phase of the heater provided. The inductance is utilized for generating/emulating back electromagnetic force of an electrical motor such that the second inverter is able to operate properly while powering the heater. The heater is formed as an ohmic resistance. By connecting the coil in series with the heater, the second inverter receives the required feedback in order to operate in its intended electrical conditions.

The thermal management unit can have a technically simple control of the heat exchange temperature between the conditioning liquid and the refrigerant fluid if the temperature of the evaporator is controlled by a driving speed of the at least one condenser fan and/or the variable speed of the compressor. Preferably, the at least one temperature sensor is provided, for example at a heat exchanger of the evaporator, for this purpose in the thermal management unit.

The thermal management unit may comprise a central controller. The temperature sensor of the heat exchanger and/or optional further temperature sensors of the thermal management unit are connected with the central controller in order to provide information about the temperature of the conditioning liquid and of the refrigerant circuit.

Additionally or alternatively, a controller of one of the inverters may be utilized as a central controller of the thermal management unit.

Preferably, the thermal management unit and all of its components are arranged in a compact housing which is transportable and which may be attached to the electrical device, e.g. a battery system, even with little space provided.

In accordance with another embodiment, the first inverter and/or the second inverter are powering the pump, the heater, the condenser fan and/or the compressor independently from the value of the voltage of the DC source. Thus, the components of the thermal management unit are supplied with constant electrical energy independently from the state of charge of the DC source, e.g. the battery system.

The conversion of the voltage between the DC voltage of the battery system and the components of the thermal management unit may follow a repeating variation and may be controlled by a mathematical algorithm or a mathematical curve, if the first inverter and/or the second inverter are configured to adapt the voltage conversion based on a time dependent charging and discharging cycle of the DC source.

In a further embodiment, the thermal management unit is configured as a mobile/portable or a stationary unit. Thus, the thermal management unit can be adapted to different applications.

In order to attach a mobile thermal management unit to a second part of the conditioning circuit of an electrical device, e.g. a battery system, the tank of the thermal management unit may comprise a reservoir volume which is equal or higher than a volume of the second part of the conditioning circuit.

The entire conditioning circuit is configured to transport preheated or precooled conditioning liquid to the electrical device, e.g. battery system, in order to provide heating or cooling operation. Thus, the entire conditioning circuit provides a final stage of the thermal conditioning of the electrical device. The entire conditioning circuit comprises the first part of the conditioning circuit and the second part of the conditioning circuit, wherein the second part of the conditioning circuit is arranged inside the electrical device and may comprise connection pipes between the thermal management unit and the electrical device.

According to a further aspect of the invention an electrical device arrangement is provided. The electrical device arrangement comprises at least one electrical device. Such electrical device may be formed or may comprise at least one battery box and/or at least one power box.

Depending on the application the at least one battery box and the power box are electrically connectable with each other. Furthermore, it is possible to connect multiple battery boxes to one power box simultaneously.

The at least one battery box may comprise one or multiple battery cells, battery modules or battery systems. The battery box is preferably based on lithium-ion or lithium-ion polymer technology. Alternatively or additionally, the battery box may comprise battery cells with variant cell technologies like LiFePO4, NiMH, NiCd, lead-acid, zinc-air and the like. Furthermore, a battery box may comprise thermal management circuits, data transfer units, overcharge protection units, balancing units, internal battery management units and the like.

The power box may comprise charging and discharging circuits for providing electrical energy to the at least one battery box and for receiving electrical energy from the at least one battery box. Thus, the power box may comprise at least one supply port for receiving energy from an external power supply. Furthermore, the power box comprises at least one load port for providing the electrical energy of the at least one battery box to at least one electrical load. Thus, the power box may comprise AC/DC converters, controllers, and protection circuits. At least one controller of the power box may communicate with the at least one battery box.

The electrical device arrangement further comprises a thermal management unit, which is thermally and electrically connected to the at least one electrical device.

The thermal management unit is electrically connectable to the at least one electrical device. The at least one electrical device is thermally coupled with a second part of a conditioning circuit which is configured to form an entire conditioning circuit with a first part of a conditioning circuit of the thermal management unit.

In cases in which the electrical device arrangement comprises more than one electrical device, the thermal management unit may be coupled to more than one electrical device and/or to all electrical devices. Alternatively, there may be provided more than one thermal management unit. Preferably, each electrical device is coupled with one corresponding thermal management unit, so that for each electrical device there is provided a corresponding thermal management unit.

Alternatively or additionally, depending on the application, multiple electrical devices may be thermally coupled to multiple second parts of the conditioning circuit. These multiple second parts of the conditioning circuit may form the entire conditioning circuit with one first part conditioning circuit.

In accordance with an embodiment, the at least one electrical device is formed as a power box and/or as a battery box. The battery box comprises at least one battery cell and is electrically and/or thermally connected to the power box. The power box comprises a power supply port for receiving electrical energy for charging the at least one battery cell of the battery box from an external power source. Furthermore, the power box comprises a load port for providing electrical energy from the at least one battery cell of the battery box and/or from the external power source to at least one external load.

Preferably, the battery box is connected via the power box with a load in order to power the load or with a power source in order to charge the battery boxes.

Preferably, the power box and/or the at least one battery box comprises a second part of the conditioning circuit. The second part of the conditioning circuit is connectable to the first part of the conditioning circuit forming an entire conditioning circuit such that the conditioning liquid may circulate through the entire conditioning circuit. Thus, thermally stressed components of the power box and/or of the at least one battery box are thermally conditioned by the thermal management unit.

The thermal management unit is preferably integrated inside a unit housing. The thermal management unit can be integrated into a housing of the battery system and/or a housing of the battery box and/or a housing of the power box. Alternatively and depending on the application, the unit housing can be mechanically connected to the housing or casing of the battery system and/or the housing of the battery box and/or the housing of the power box.

The thermal management unit and the battery system are preferably interconnected via a piping system for transferring the conditioning liquid for heating or cooling operation.

In an embodiment of the electrical device arrangement, the at least one battery box is configured as a DC source of the thermal management unit, wherein the DC source comprises a voltage in a range of 300 VDC to 800 VDC, preferably 550 VDC to 800 VDC. Thus, the thermal management unit can be electrically supplied by the battery box. Especially, the thermal management unit can be electrically supplied by the battery box independent from the state of charge or the state of discharge of the battery cells of the at least one battery box.

The entire electrical device arrangement may comprise a common supply voltage between 300 and 800 VDC, preferably between 550 and 800 VDC. This DC source voltage is variable in time to follow the charging and discharging cycles of the batteries of the battery system, where the refrigerant circuit and the conditioning circuit provides stable condition to the batteries cooling system or the second part of the conditioning circuit. The stable condition especially means that the flow rates of the working liquids and fluids in the refrigerant circuit and the conditioning circuit are kept constant.

The at least one battery box of the electrical device arrangement may have a field of application in in stationary applications such as charging stations for e-mobility applications, to provide electrical power to loads in remote locations or in locations where the provision of grid power is not reliable due to unstable grids. It may also be possible to apply the electrical device arrangement to vehicles, such as trucks, buses, trains, etc. However, it may be preferably to not apply the electrical device arrangement to vehicles.

The above-described characteristics, features and advantages of this invention and the way in which these are achieved will be more clearly comprehensible in connection with the description below of exemplary embodiments which are explained in detail in relation to the drawings, in which:
- Fig. 1: shows a hydraulic diagram of the thermal management unit according to an embodiment of the invention,
- Fig. 2: shows an electrical diagram of certain components of a thermal management unit,
- Fig. 3: shows a perspective view of the thermal management unit illustrating components of a refrigerant circuit,
- Fig. 4: shows a perspective view of the thermal management unit illustrating components of a first part of a conditioning circuit,
- Fig. 5: illustrates different perspectives of the housing of the thermal management unit and an air flow through the housing,
- Fig. 6: shows a perspective view of the housing of the thermal management unit with fluid connections of a first part of the conditioning circuit,
- Fig. 7: shows an electrical diagram of the components powered by a first inverter,
- Fig. 8: shows an electrical device arrangement according to an embodiment of the invention with at least one electric device and a thermal management unit, and
- Fig. 9: shows an exemplary electrical diagram of the electrical devices shown in Fig. 8.

The original problem faced by the inventor was to develop a water based thermal management system e.g. in form of a thermal management unit 10 (chiller including a water heater) to provide thermal management (cooling and heating) for (also mobile) battery systems (battery packs, boxes etc) used as electrical storage and electrical back-up for on-grid and off-grid energy generating systems such as photovoltaic (solar energy) or wind turbines (wind energy), which can be supplied with electrical power from the battery system itself. This poses a certain technical challenge because the electrical power supplied by the battery system is typically a DC-Voltage, for example in the range ^{∼} 500 to 800 VDC, depending on the charging status of the batteries (full, empty, charging, discharging).

Standard chillers typically operate on public grid-based power supply, e.g. in Germany or Italy of 3^{∼} 400V 50Hz or 230V 50Hz (different Voltages and frequencies in other countries) and cannot be operated on for example 500 to 800 VDC. Therefore, a solution had to be found to convert the available electrical power of 500 to 800 VDC to a voltage and frequency of which the electrically driven components of a chiller (compressor, pump, condenser fans, resistive heater) can be operated.

Very typical devices to invert DC-voltage to AC-voltage are inverters used e.g. in solar on-grid (also called grid-tied) or off-grid solutions. In on-grid photovoltaic systems the solar inverter converts the DC-voltage from the solar cells to AC-power which is synchronized with the phase and the voltage of the grid in which the produced electricity is fed. However, due to the nature of these inverters to optimize the operating point of the solar cells as well as providing a synchronized voltage and frequency of the grid power, these inverters are not suitable to provide the right voltage and frequency (and power) needed to run variable speed chiller components such as compressor, pump, or fans. And even off-grid solar inverters, which do not need to synchronize the output AC-Voltage with the grid voltage and frequency are not set-up to drive these components, because these solar inverters are designed as well to provide MPPT (Maximum Power Point Tracking) of the solar cells and be able to manage and provide the right voltage and frequency for an Island solution (off-grid) and be able to charge battery back-up systems (via charging inverters) which are typical for off-grid solutions.

If usable, the advantage of these solar inverters is that they can be fed directly with DC-Voltage. Industrial inverters, however, which are suitable to drive the above-mentioned chiller components (compressor, pump, heater) typically have a mains input of AC-power, as these are typically used as frequency inverters, i.e. they use e.g. 3^{∼} 400V 50Hz as input and then convert this to a variable voltage and frequency needed to run motors at different speed.

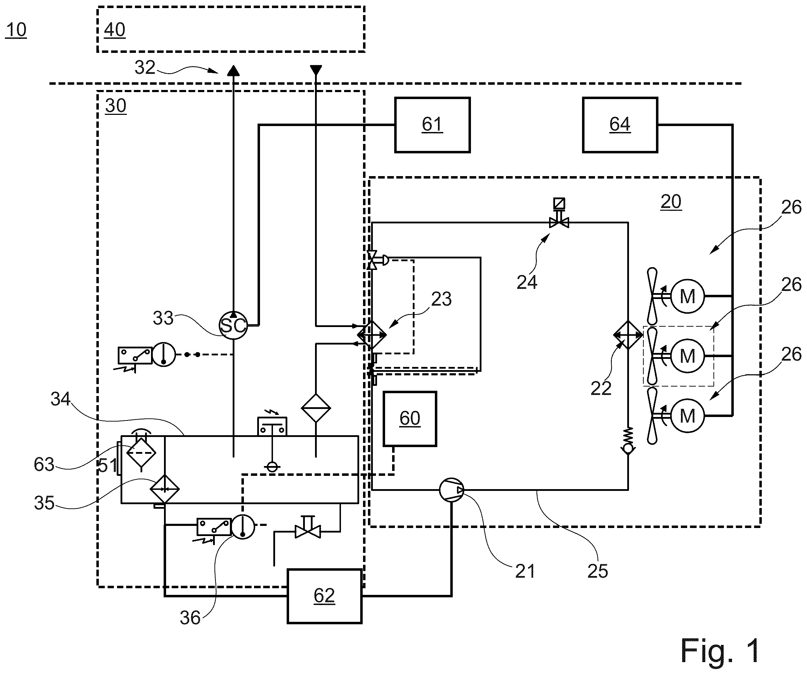

In Fig. 1 a hydraulic diagram of the thermal management unit 10 according to one embodiment of the invention is illustrated. The thermal management unit 10 comprises a refrigerant circuit 20 with at least one compressor 21, a condenser 22, an evaporator 23 and an expansion valve 24.

The compressor 21 pumps a refrigerant fluid inside pipes 25 of the refrigerant circuit 20 in order to enable an evaporation of the refrigerant fluid inside the evaporator 23 after passing the expansion valve 24 and a condensation of the evaporated refrigerant fluid in the condenser 22.

Due to the resulting heat during the condensation of the refrigerant fluid in the condenser 22, the condenser 22 heats up and requires active or passive cooling. According to the shown embodiment the condenser 22 is actively cooled by three radial condenser fans 26.

The condenser fans 26 are supplied with 48VDC electrical power where the input of ^{∼}500V to 800VDC is converted in a DC/DC converter 64 to 48VDC. This is possible because there are fans on the market which provide the required performance (airflow and pressure) and which can be run on 48VDC. For the compressor 21 and the pump 33 such DC-components are not available.

The temperature of the evaporator 23 decreases since the refrigerant fluid evaporates due to being expanded to a lower pressure and temperature by the expansion valve 24. The evaporator 23 is coupled with a first part of a conditioning circuit 30.

The first part of the conditioning circuit 30 ends in fluid connectors 32 for connecting a second part of a conditioning circuit 40. The second part of the conditioning circuit 40 is externally arranged from the thermal management unit 10 and can be part of e.g. a battery box 50 which will be described and illustrated below.

The first part of the conditioning circuit 30 and the second part of the conditioning circuit 40 are forming an entire or a closed conditioning circuit.

The first part of the conditioning circuit 30 comprises at least one pump 33 for circulating a conditioning liquid, a tank 34 and a heater 35 coupled to the tank 34 for heating the conditioning liquid. For the sake of ease the conditioning liquid is in following described as water. The first part of the conditioning circuit 30 ends in the fluid connectors 32.

The tank 34 comprises a temperature sensor 36 for measuring the temperature of the water inside the tank 34.

The pump 33 is powered by a first inverter 61.

The compressor 21 and the heater 35 are selectively powered by a second inverter 62.

Both inverters 61, 62 are formed as frequency inverters and can be controlled by a central controller 60 of the thermal management unit 10. Furthermore, the controller 60 is connected to relevant sensors, like the temperature sensor 36 of the tank 34. The thermal management unit 10 may comprise further sensors like pressure sensors, fluid flow sensors, temperature sensors, voltage meters, current meters and so forth.

In the described embodiment the first inverter 61 and the second inverter 62 are designed as industrial inverters and can be coupled together on a DC-Bus and/or DC-Link which connects directly to the intermediate DC-circuit of these inverters. This DC-Link is usually used to connect multiple industrial inverters together and to be able to utilize the DC power generated when a motor and inverter in this set-up operate in a generator mode (e.g. when a motor is not supplied with power anymore and keeps turning because of its inertia forces, generating an AC-voltage which can be converted back into DC-voltage and be used to supply this to other inverter-motor combinations via the DC-Link). This DC-Link is used to supply the 500 to 800VDC via the DC-Link of the inverters as the mains power supply.

Thus, the first inverter 61 and the second inverter 62 are used to utilize the DC-Link and to drive the compressor 21 and the pump 33, respectively.

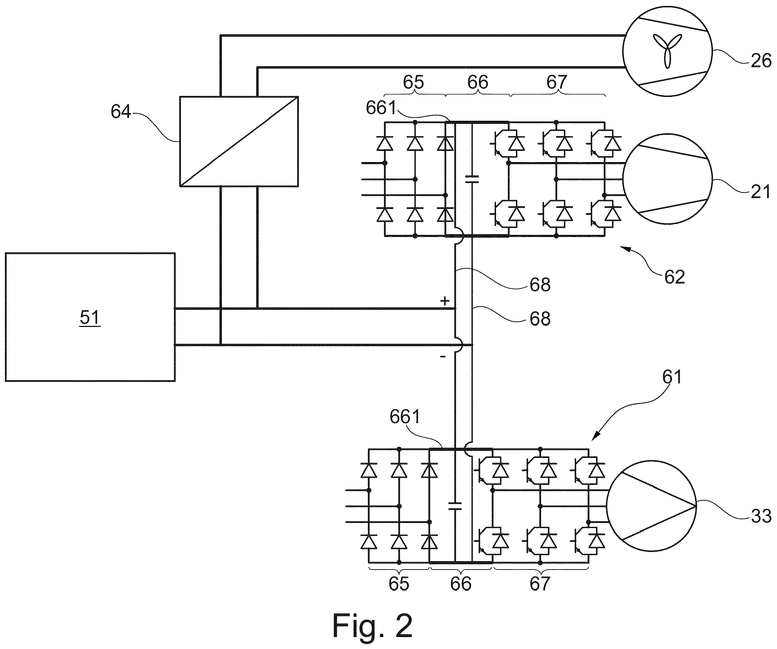

Fig. 2 shows an electrical diagram of some components of a thermal management unit according to an embodiment of the invention. The DC source 51 is electrically connected with a DC/DC converter 64 and supplies DC power to the same. The DC/DC converter 64 powers one or more condenser fans 26. The condenser fans 26 are, for example, supplied with 48VDC electrical power from the DC/DC converter 64, because the DC/DC converter converts the variable DC voltage of the DC source 51 to 48VDC. The motors of the fans 26 are DC motors which may operate with the DC Voltage supplied by the DC/DC converter 64 (e.g. 48VDC).

The DC source 51 is further connected with a DC bus 68. The DC bus 68 connects to an input (here a DC link 661) of an intermediate circuit 66 of a first inverter 61 and to another input (here a DC link 661) of an intermediate circuit 66 of a second inverter 62. Both, the first inverter 61 and the second inverter 62, are frequency inverters comprising a rectifier circuit 65, an intermediate circuit 66 and an inverter circuit 67. The variable DC input voltage of the DC source 51 is converted in the first inverter 61 and the second inverter 62 respectively to an AC output voltage, e.g. a three phase 400 VAC voltage. The first inverter 61 powers the pump 33 with the AC output voltage and the second inverter 62 powers the compressor 21 with the AC output voltage respectively. Both, the pump 33 and the compressor 21 are connected to the respective inverter circuit 67 of the first inverter 61 and the second inverter 62 respectively.

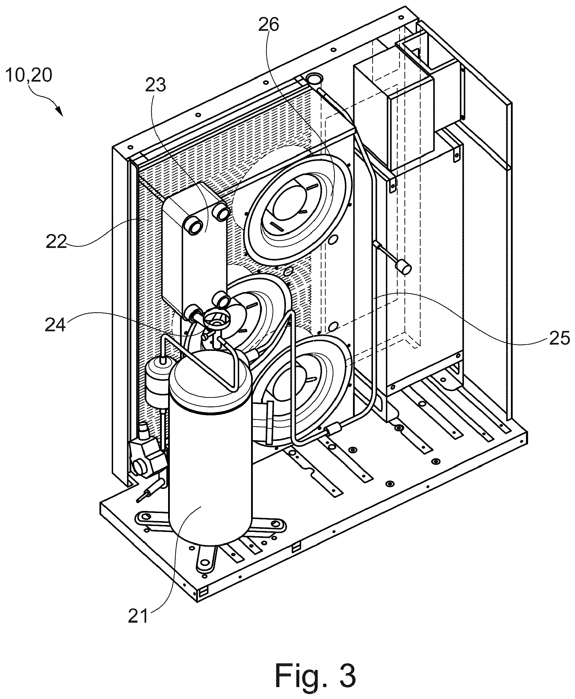

Fig. 3 shows a perspective view of the thermal management unit 10 illustrating components of a refrigerant circuit 20. As described above, the compressor 21 compresses and pressurizes the refrigerant. At this point, the refrigerant is a hot gas. The refrigerant is then pushed through the pipes 25 to the condenser 22 which is cooled by three condenser fans 26 and which turns the vapor into liquid. The refrigerant (which is then in a liquid state) passes the expansion valve 24 where the refrigerant is expanded to a lower pressure and temperature to absorb heat in the evaporator 23 where the fluid is evaporated to a vapor. The refrigerant (which is then in a gaseous state) is then pushed further along to the compressor 21 where the cycle starts again.

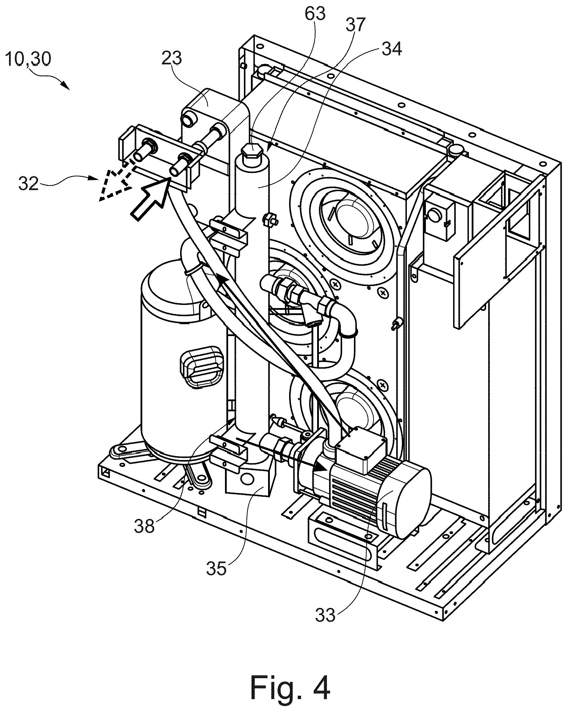

In Fig. 4 a perspective view of the thermal management unit 10 is shown illustrating components of a conditioning circuit, especially of the first part of the conditioning circuit 30. The pump 33 forces the water through the pipes of the first part of the conditioning circuit 30 starting from the fluid connectors 32 through the evaporator 23 and the tank 34.

Inside the tank 34 the water has got a bigger diameter to flow such that its velocity is reduced. At a bottom part of the tank 34 the pump 33 may suck the water and forward it to the fluid connectors 32 again, where it may flow through the second part of the conditioning circuit 40.

The tank 34 is equipped with a pressure relieve valve 63 at its highest side 37, wherein the suction inlet of the pump 33 is connected with the tank 34 at the tanks 34 lowest side 38. Also the heater 35 is attached at the lowest side 38 of the tank 34 in order to heat the water inside the tank 34, if heating operation of the thermal management unit 10 is required.

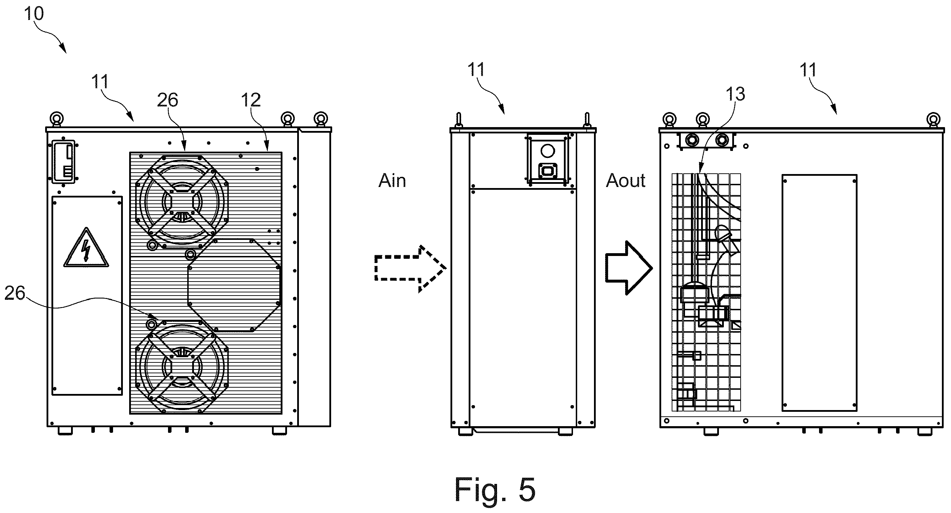

Fig. 5 illustrates different perspectives of the housing 11 of the thermal management unit 10 and an air flow Ain, Aout through the housing 11. Especially, an air flow Ain directed inside the housing 11 is blown by the exemplary two condenser fans 26 through an air inlet 12 of the housing 11 onto the condenser 22.

The air cools the condenser 22 and is heated. The heated air leaves the housing 11 via an air outlet 13 of the housing 11 as Aout.

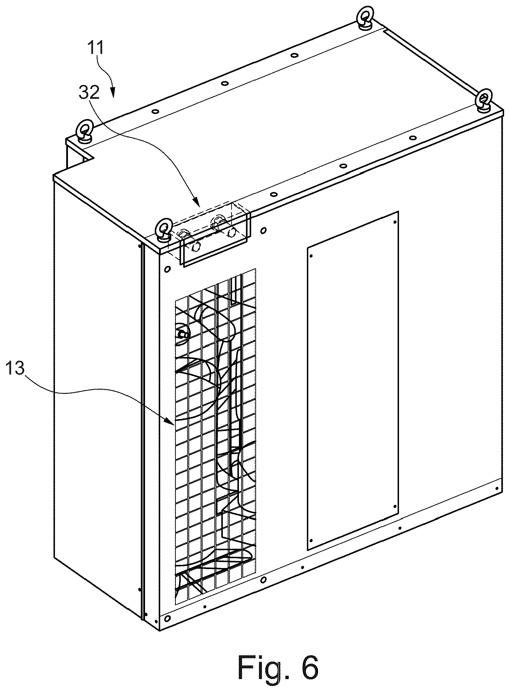

In Fig. 6 a perspective view of the housing 11 of the thermal management unit 10 with fluid connections 32 of a first part 30 of the conditioning circuit is illustrated. The fluid connections 32 are positioned above the air outlet 13 of the housing.

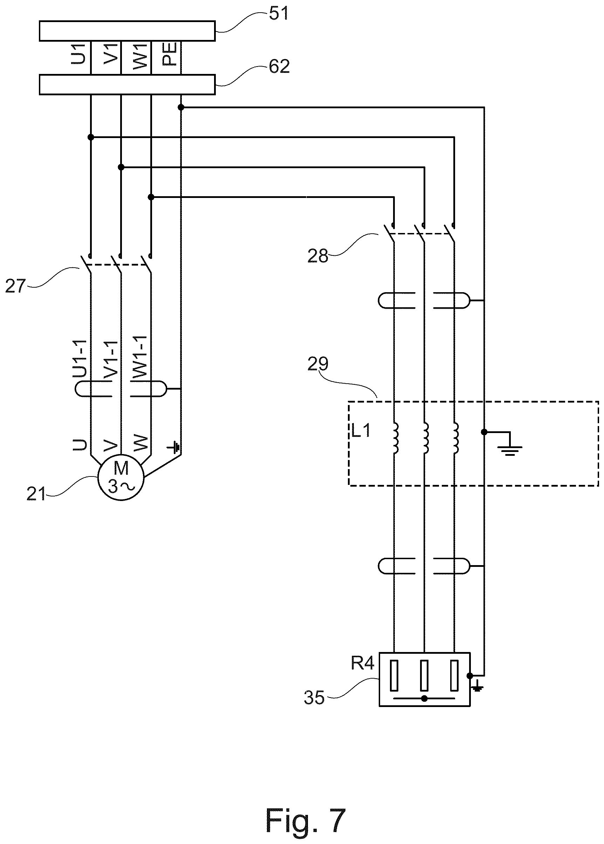

Fig. 7 shows an electrical diagram of the components powered by a second inverter 62 of the thermal management unit 10. The compressor 21 or the heater 35 is selectively connectable via a second inverter 62 to a DC source 51. The electrical diagram illustrates the three-phase electric motor of the compressor 21 which is connectable via a first switch 27 to the second inverter 62. Alternatively, the heater 35 may be connected via a second switch 28 to the second inverter 62.

Both switches 27, 28 are designed as three phase switches. Preferably only one of the two switches 27, 28 may be activated in order to prevent both the compressor 21 and the heater 35 operating simultaneously. During the operation of the thermal management unit 10 the conditioning liquid may either require heating or cooling.

Another challenge is to drive the resistive heater with the available electrical supply of ^{∼}500V to 800VDC. Because of the large voltage range of ^{∼}300V the heating capacity of a resistive heater 35 would strongly vary according to the relation P=U²/R (where P=Heating Power, U=Voltage and R=Resistance of resistive heater). Therefore, the heater 35 shall also be driven through the (controlled) voltage provided by the inverter. The industrial inverters 61, 62 control the output voltage, current and frequency based on the back electromagnetic force (back EMF) of the motor windings sensed via the output lines. These inverters 61, 62 would sense no back EMF if only resistive heaters 35 were connected because these do not generate a magnetic field and therefore the inverter 62 would not supply the correct electrical power and could take damage. To overcome this problem the resistive heater(s) 35 are placed in line with inductivity formed as coils 29, which were carefully selected to create just the right magnetic field (back EMF) to emulate a motor winding such that the second inverter 62 provided maximum output power (voltage) to the heaters 35.

Thus, according to the shown embodiment for each phase one coil 29 for providing back electromagnetic force is arranged in the electrical paths between the second inverter 62 and the heater 35. An inductance of the coils is adapted to electrical characteristics of the second inverter 62.

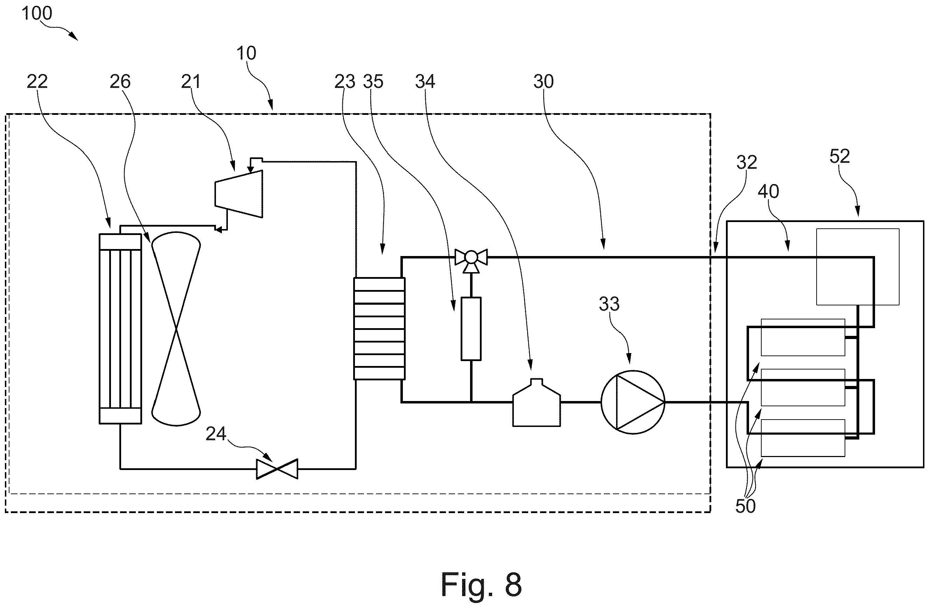

Fig. 8 shows an electrical device arrangement 100 according to one embodiment of the invention with at least one electric device and a thermal management unit 10 which is thermally and electrically connected to the at least one electrical device. The at least one electric device according to the embodiment consists of one power box 53 and three battery boxes 50.

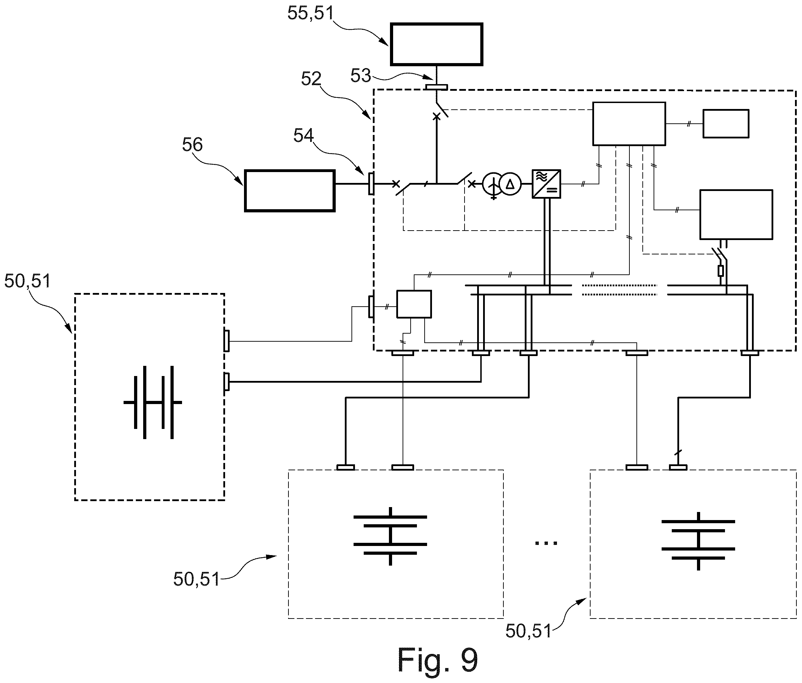

The battery boxes 50 and the power box 52 are electrically connected with each other. Further description to the electrical side of the electrical device arrangement 100 is provided in Fig. 9.

In Fig. 8 the thermal connection of the power box 52 and the three battery boxes 50 via the second part 40 of the conditioning circuit is depicted. The second part 40 of the conditioning circuit connects all of the electrical devices 50, 52 thermally with the first part 30 of the conditioning circuit. Thus, the thermal management unit 10 may cool or heat the electrical devices 50, 52 via the entire conditioning circuit 30, 40.

Fig. 9 shows an exemplary electrical diagram of the electrical devices 50, 52 shown in Fig. 8. The power box 52 comprises charging and discharging circuits for providing electrical energy to the battery boxes 50 and for receiving electrical energy from the at least one battery box 50. The charging and discharging circuits may comprise inverters or AC/DC converters.

Moreover, the power box 52 may comprise at least one supply port 53 for receiving energy from an external power supply 55. Furthermore, the power box comprises at least one load port 54 for providing the electrical energy of the at least one battery box 50 to at least one electrical load 56. Thus, the power box 52 may comprise AC/DC converters, controllers, and protection circuits. At least one controller of the power box 52 may communicate with the at least one battery box 50.

The battery boxes 50 are connected with the power box 52 for example in order to supply the pump 33, the heater 35, the condenser fans 26 and the compressor 21 with electrical energy from the external supply and/or from the batteries of the battery boxes 50.

According to the illustrated amendment, the battery boxes 50 and/or the external power supply may operate as DC source for the components of the thermal management unit 10.

The power box 52 and/or the battery boxes 50 comprise a second part 40 of the conditioning circuit. The second part 40 of the conditioning circuit is connectable to the first part 30 of the conditioning circuit forming an entire conditioning circuit such that the conditioning liquid may circulate through the entire conditioning circuit. Thus, thermally stressed components of the power box 52 and/or of the battery boxes 50 are thermally conditioned by the thermal management unit 10.

Although the invention has been illustrated and described in detail by means of the preferred embodiments, the inventive electrical connector is not restricted by the disclosed examples, and other variations may be derived therefrom by a person skilled in the art without departing from the scope of protection of the invention.

### References

- 100: electrical device arrangement

- 10: thermal management unit
- 11: housing
- 12: air inlet of the housing
- 13: air outlet of the housing

- 20: refrigerant circuit
- 21: compressor
- 22: condenser
- 23: evaporator
- 24: expansion valve
- 25: pipes
- 26: condenser fan
- 27: first switch
- 28: second switch
- 29: coil

- 30: first part of the conditioning circuit
- 32: fluid connectors / connections
- 33: pump
- 34: tank
- 35: heater
- 36: temperature sensor
- 37: highest side of the tank
- 38: lowest side of the tank

- 40: second part of the conditioning circuit

- 50: battery box
- 51: DC source
- 52: power box
- 53: supply port
- 54: load port
- 55: external power supply
- 56: electrical load

- 60: central controller
- 61: first inverter
- 62: second inverter
- 63: pressure relieve valve
- 64: DC/DC Converter
- 65: rectifier circuit
- 66: intermediate circuit
- 661: DC Link
- 67: inverter circuit
- 68: DC Bus

- Ain: air flow into the housing 11
- Aout: air flow out of the housing 11

## Claims

1. Thermal management unit (10) for thermal conditioning of at least one electrical device, comprising
a refrigerant circuit (20) with at least one compressor (21), a condenser (22), an evaporator (23) and an expansion valve (24); and
a first part of a conditioning circuit (30) with at least one pump (33) for circulating a conditioning liquid, a tank (34) and a heater (35),
wherein the pump (33) is electrically connectable to a DC source (51) via a first inverter (61),
and wherein the compressor (21) or the heater (35) are, in particular selectively, connectable via a second inverter (62) to the DC source (51), wherein at least one of the first inverter (61) and the second inverter (62)
- is formed as a frequency inverter, comprising a rectifier circuit (65), an intermediate circuit (66) and an inverter circuit (67), wherein the intermediate circuit (66) comprises an input,
- is connectable via the input of the intermediate circuit (66) with the DC source (51), and
- is configured to be powered by the DC source (51) which comprises a voltage variation range.

2. Thermal management unit (10) of claim 1, wherein both the first inverter (61) and the second inverter (62) are formed as a first frequency inverter and a second frequency inverter, both comprising the rectifier circuit (65), the intermediate circuit (66) and the inverter circuit (67), wherein the input of the intermediate circuit (66) is connectable with the DC source (51), and wherein the first inverter (61) and the second inverter (62) are configured to be powered by the DC source (51) which comprises a voltage variation range.

3. Thermal management unit (10) of claim 1 or 2, wherein the thermal management unit (10) is configured for thermal conditioning of the electrical device which is formed as at least one battery system or parts thereof, wherein preferably the thermal management unit (10) is configured to be powered by the at least one battery system or parts thereof as a DC source (51) of the thermal management unit (10).

4. Thermal management unit (10) according to any one of the preceding claims, wherein the thermal management unit (10) comprises at least one condenser fan (26) for cooling the condenser (22) of the refrigerant circuit (20), wherein the at least one condenser fan (26) is connected to the DC source (51) via a DC/DC converter (64), via the first inverter (61), via the second inverter (62), or via a third inverter.

5. Thermal management unit (10) according to any one of the preceding claims, wherein the tank (34) comprises a cylindrical form with an inner diameter which is bigger than an inner diameter of pipes of the first part of the conditioning circuit (30), wherein the tank (34) comprises a fluid level switch.

6. Thermal management unit (10) according to any one of the preceding claims, wherein the tank (34) is equipped with a pressure relieve valve (63) at its highest side (37), wherein the suction inlet of the pump (33) is connected with the tank (34) at the tanks lowest side (38), wherein preferably the pressure relieve valve (63) is formed as a cap with a spring-loaded ball valve, wherein further preferably the pressure relieve valve (63) is arranged above an air column inside the tank (34).

7. Thermal management unit (10) according to any one of the preceding claims, wherein the pump (33) and/or the compressor (21) are configured to perform in a fixed speed or variable speed operation.

8. Thermal management unit (10) according to any one of the preceding claims, wherein the voltage variation range of the DC source (51) for powering the first inverter (61) and/or the second inverter (62) is at least 100 V, at least 150 V, at least 200 V or at least 230 V.

9. Thermal management unit (10) according to any one of the preceding claims, wherein at least one coil (29) for providing back electromagnetic force is arranged in at least one electrical path between the second inverter (62) and the heater (35), wherein an inductance of the at least one coil (29) is adapted to electrical characteristics of the second inverter (62).

10. Thermal management unit (10) according to claim 4 or claim 7, wherein the temperature of the evaporator (23) is controlled by a driving speed of the at least one condenser fan (26) and/or the variable speed of the compressor (21).

11. Thermal management unit (10) according to any one of the preceding claims, wherein the first inverter (61) and/or the second inverter (62) are powering the pump (33), the heater (35), the at least one condenser fan (26) and/or the compressor (21) independently from the value of the voltage of the DC source (51), wherein preferably the first inverter (61) and/or the second inverter (62) are configured to adapt the voltage conversion based on a charging and discharging cycle of the DC source (51).

12. Thermal management unit (10) according to any one of the preceding claims, wherein the thermal management unit (10) is configured as a portable unit or a stationary unit.

13. Electrical device arrangement (100), comprising at least one electrical device and a thermal management unit (10) according to any one of the preceding claims, which is thermally and electrically connected with the at least one electrical device, wherein the electrical device is thermally coupled with a second part of a conditioning circuit (40) which is configured to form an entire conditioning circuit with a first part of a conditioning circuit (30) of the thermal management unit (10).

14. Electrical device arrangement (100) according to claim 13, wherein the at least one electrical device is formed as a power box (52) and/or as a battery box (50),
wherein the battery box (50) comprises at least one battery cell and is connected to the power box (52),
wherein the power box (52) comprises a power supply port (53) for receiving electrical energy for charging the at least one battery cell of the battery box (50) and a load port (54) for providing electrical energy of the at least one battery cell of the battery box (50) to at least one external load (56),
wherein preferably, the power box (52) and the battery box (50) each comprise a thermal management unit (10).

15. Electrical device arrangement (100) of claim 13 or 14, wherein the electrical device comprises at least one battery box (50) which is configured as a DC source (51) of the thermal management unit (10), wherein the DC source (51) comprises a voltage in a range of 300 VDC to 800 VDC, preferably 550 VDC to 800 VDC.
